Europäisches Patentamt

European Patent Office

Office européen des brevets

(11) Publication number: **0 297 406 B1**

# EUROPEAN PATENT SPECIFICATION

(45) Date of publication of patent specification: **18.03.92**

(21) Application number: **88109881.8**

(22) Date of filing: **22.06.88**

(51) Int. Cl.⁵: **C03B 5/16**, F27B 14/12, F27D 1/12

(54) **Heating vessel lid construction.**

(30) Priority: **01.07.87 US 68375**
 **16.11.87 US 121424**

(43) Date of publication of application:
 **04.01.89 Bulletin 89/01**

(45) Publication of the grant of the patent:
 **18.03.92 Bulletin 92/12**

(84) Designated Contracting States:
 **AT BE CH DE ES FR GB GR IT LI LU NL SE**

(56) References cited:
 **EP-A- 0 128 494**
 **US-A- 4 021 603**
 **US-A- 4 197 422**
 **US-A- 4 668 272**
 **US-A- 4 704 155**

(73) Proprietor: **PPG INDUSTRIES, INC.**
 **One PPG Place**
 **Pittsburgh Pennsylvania 15272(US)**

(72) Inventor: **Kunkle, Gerald Erasmus**
 **227 Argonne Drive**
 **New Kensington, Pa. 15068(US)**
 Inventor: **Pecoraro, George Anthony**
 **439 Dakota Drive**
 **Lower Burrell, Pa. 15068(US)**
 Inventor: **Demarest, Henry Martin, jr.**
 **1208 Cambridge Street**
 **Natrona Heights, Pa. 15237(US)**
 Inventor: **Hughes, Gary Noel**
 **146 Seibert Road**
 **Pittsburgh, Pa. 15237(US)**

(74) Representative: **Sternagel, Hans-Günther, Dr.
 et al**
 **Patentanwälte Dr. Michael Hann Dr. H.-G.
 Sternagel Sander Aue 30**
 **W-5060 Bergisch Gladbach 2(DE)**

Rank Xerox (UK) Business Services

## Description

### Background of the Invention

#### 1. Field of the Invention

This invention relates to high temperature heating vessels, and in particular, to technique for prolonging the service life of a lid for a glass batch melting furnace by protecting the inner exposed surface of the lid. This invention also relates to a heat and wear resistant lid for a glass melting furnace.

#### 2a. Technical Considerations

One type of glass melting process entails feeding of glass batch materials onto a pool of molten glass contained in a tank type melting furnace and applying thermal energy to melt the materials into the pool of molten glass. The melting tank conventionally contains a relatively large volume of molten glass so as to provide sufficient residence time for currents in the molten glass to effect some degree of homogenization before the glass is discharged to a forming operation.

U S-A-4,381,934 to Kunkle and Matesa, which teachings are incorporated by reference, discloses an alternative type of glass melting arrangement, and more particularly an intensified batch liquefaction process in which large volumes of glass batch materials are efficiently liquefied in a relatively small liquefaction vessel. This type of process, particularly when using intensified heat sources such as oxygen flame burners, produces relatively small volumes of high temperature exhaust gases.

During the heating and melting process, it is believed that certain components of the batch material vaporize. These vapors may be corrosive to exposed metal and refractory surfaces and when combined with the hot exhaust gas stream that circulates through vessels of the type disclosed in U S-A-4,381,934, corrode exposed interior surfaces, and in particular the vessel lid. In addition, the exhaust gas may entrain particulate matter within the vessel which may act as an abrasive on an exposed surface. This corrosive and abrasive gas stream greatly reduces the service life of the vessel lid which may result in increased costs and additional down time for lid repair and replacement.

Due to the corrosive effects of the exhaust gas stream within the vessel which are accelerated by the high temperatures as well as any abrasive or erosive effects from the entrained particulates, exposed surfaces within the vessel, and in particular the vessel lid, must be designed to withstand these deleterious conditions so as to reduce maintenance and/or replacement of the lid that is necessitated by excessive wear along its inner surface.

The high temperatures within the vessel may also pose additional processing problems. For example, heat loss will effect the efficiency of the operation. The more heat that is lost during the liquefaction process through uninsulated and/or exposed interior surfaces of the vessel, the less efficient the liquefaction process becomes. This may require additional heat input to the vessel in order to account for the amount of heat lost. In particular, the removal of heat by cooling the vessel lid in order to reduce heat degradation and prolong service life reduces the overall heating efficiency of the operation. If this heat loss could be controlled and reduced, the overall efficiency of the operation would be increased.

It would be advantageous to have a heating vessel lid with a protective coating on its exposed inner surface that both insulates the lid, thus reducing heat loss from the heating vessel, and protects the exposed inner surface from a high temperature corrosive gas stream entrained with abrasive particulates, so as to increase its service life and decrease overall operating costs. In addition, it would be advantageous to have a wear resistant lid design that could withstand such operating conditions and provide a prolonged operating life.

U S-A-3,165,301 to Riviere teaches a method and device for protecting refractory walls. A burner positioned in the roof of an elongated horizontal furnace flows a gaseous suspension of carbon particles along the roof to protect the roof against heat radiating from the flame formed by burners in the furnace. The carbon particle suspension is circulated within the furnace parallel to the roof and in a direction opposite to that of the main burner flame. The arrangement requires additional gas to be added to the heating system. Furthermore, the carbon particles are an additional contaminant in the heating operation.

U S-A-4,021,603 to Nanjyo et al teaches a cooled metal roof assembly for an arc furnace with refractory liner to protect the interior roof surface from high heat. Fire brick or other refractory material is provided within grooves formed on the interior surface of the roof to improve resistance to heat of the furnace roof assembly. The refractory material must be periodically replaced in order to ensure proper thermal insulation. In addition, the center portion of the lid is a consumable substructure that includes three hole for electrodes. There is no protection provided to this portion of the lid.

U S-A-4,182,610 to Mizuno et al teaches a water cooled metal cover for steel making or smelting furnace. Fins in the form of a lattice structure extend from the interior surface of an annular portion of the cover to provide a surface to which slag resulting from splashes within the furnace may adhere. The splashes of slag that adhere to the fins insulate the lower surface of the cover's cooling jacket. The center portion of the cover which includes openings for electrodes, does not have the lattice structure to accumulate the slag so that there is no protection provide on this portion of the lid. In addition, the random splashing of the slag does not provide a uniform buildup of insulating material over the entire cover surface.

U S-A-4,434,495 to Tomizawa et al. teaches a cooling pipe structure for arc furnaces. Wherein cooling pipes are embedded within refractory blocks. The pipes are positioned adjacent to the surface of the block facing the inside of the furnace to intensify the cooling of the surface. Slag plashed against the block surface will congeal and adhere to the block to form an insulating film.

U S-A-3,765,858 to Settino teaches a method of roll forming a ribbon of glass at high temperatures by bringing the glass, while still molten, into contact with a roll faced with an iron-based alloy which includes, among other components, 5.0 to 5.8 percent chromium by weight. The patent discloses other roll configurations wherein the rolls are provided with a surface of AISI type 410 or 420 stainless steel.

U S-A-4,216,348 to Greenberger teaches a water cooled roof panel assembly for an electric arc furnace. Copper sheets are brazed to a steel backing having integral ducts to circulate cooling fluid through the panel. An outer ring around the roof assembly acts as both a water source and drain for the panels.

U S-A-4,182,610 to Mizuno et al. and 4,197,422 to Fuchs et al. teach a water cooled furnace cover having a plurality of cooling boxes or jackets that provide a ducting arrangement such that coolant may circulate through the cooling boxes to cool the furnace cover. In Mizuno et al., fin-like members extend from the lower surface of the furnace cover so that a slag layer may adhere to the fins to form a heat insulating layer. In Fuchs et al., a protective layer of refractory material is disposed on the underside of the cooling boxes to provide additional thermal protection for the cover.

U S-A-4,453,253 to Lauria et al. teaches a wall and roof construction for electric arc furnaces that are made of graphite blocks with removably attached fluid cooled panels. The panels contain conduits for circulating a cooling fluid along the exterior surface of the block to cool it.

It is the object of the invention to provide a heat and wear resistant, vessel lid, that is subjectable to high temperature, corrrosive and abrasive conditions.

This object is solved by a lid for a batch material heating vessel having a cavity wherein exhaust gas resulting from heating means applying heat to a batch material on the inner surface of said vessel circulates therein, characterized in that the lid comprises a main body portion with a lower major surface facing the interior of said heated vessel and means are provided to cool and to control cooling of said lower surface such as to catch particulate and molten material entrained by the exhaust gas which forms a protective layer and to control the thickness of this layer.

This object is further solved by a lid for a batch material heating vessel having a cavity wherein exhaust gas resulting from heating means applying heat to a batch material on the inner surface of said vessel circulates therein, characterized in that the lid comprises a main support plate with a lower major surface facing the interior of said heating vessel, a protective member is provided overlaying at least a portion of said support plate wherein said member is resistant to high temperature, abrasive and corrosive gas and means are provided to cool and to control cooling of said support plate such as to catch particulate and molten material entrained by the exhaust gas which forms a protective layer and to control the thickness of this layer.

The prior art teaches lid construction furnaces but does not disclose controlling the cooling of the lid to permit materials entrained in hot gases circulating within the furnace to be deposited on the inner surface of the lid to form a relatively uniform and continuous insulating and protective layer herein, whereby the thickness of the layer, and its associated insulative properties may be adjusted by varying the cooling of the lid.

Hot exhaust gas which circulates within the vessel includes entrained particulate and molten materials, which may corrode and thermally degrade exposed surfaces within the vessel. In both above embodiments the exposed inner surface of the lid is cooled such that the particulate and molten material that contacts the surface will condense and stick to the surface. Additional entrained material build up on previously deposited material so as to increase the material layer thickness. This layer both thermally insulates the lid surface and protects it against corrosion from materials within the circulating exhaust gas stream. As the layer thickness increases, so does the insulative properties. When the temperature within the heating vessel is sufficiently high, newly deposited material on the layer will be melted off so as to maintain a relatively constant layer thickness over the lid surface. The cooling rate of the lid may be varied in order to change the thickness of the built-up layer.

In the second above embodiment the lid comprises a main support plate constructed from for example, low carbon steel, which is covered with a protective facing member to increase the useful operating life of the lid. The exposed surface of the lid is, as stated above, cooled so as to further reduce the deleterious accelerating affect the high temperature have on the corrosion of the lid.

In one particular embodiment of the invention, the protective member is constructed from a chromium containing alloy that is approximately 10 to 25 percent chromium by weight. The protective member may be a chromium steel alloy plate or weld overlay. The lid is cooled to maintain a member temperature between approximately 482°C to 649°C (900°F to 1200°F) so that entrained materials within the circulating exhaust gas adhere to and build up on the exposed surface of the member and form an insulating and protective layer. Chromium alloy steel is used for the protective member because of its high temperature and abrasive resistant characteristics as well as its resistance to oxidization and sulfidation.

The present invention also provides a method of protecting a lid of a batch material heating vessel having a cavity wherein exhaust gas circulates which has resulted from heating means applying heat to a batch material on the inner surface of said vessel and wherein said exhaust gas includes entrained particulate and molten material and moves against a lower major surface of said lid **characterized by** cooling said lower major surface of said lid to a temperature such that said particulate material contacting said cooled surface will adhere to said surface and form a protective layer on said surface wherein additional entrained material adheres to previously deposited entrained material so as to increase the thickness of said layer and controlling the thickness of the protective layer by controlling the cooling.

Brief Description of the Drawings

Figure 1 is a cross-sectional view of a liquefaction vessel with a lid having feature the present invention including a lid with a protective insulating layer.

Figure 2 is a graph showing the insulating properties of a cooled metal lid used in a liquefaction vessel as batch material adheres to the interior lid surface.

Figures 3, 4 and 5 are enlarged cross-sectional views of alternate embodiments of the present invention.

Figure 6 is a plan view of the expanded metal shown in the embodiment illustrated in Figure 5.

Figure 7 is a cross-sectional of an alternate liquefaction vessel having the features of the present invention including a heat and wear resistant lid.

Figure 8 is an enlarged top view of a lid module for the heating vessel lid illustrated in Figure 7 with portions removed for clarity.

Figure 9 is a cross-sectional view through line 9-9 of Figure 8 illustrating the protective facing members, the batch build-up layer, the expanded metal anchors, the cooling ducts and hanger support arrangement.

Figure 10 is a cross-sectional view through line 10-10 of Figure 8 illustrating the lid module interconnecting arrangement with portions removed for clarity.

Figure 11 is a view similar to Figure 10 illustrating an alternate embodiment of the invention.

Figure 12 is a view along line 12-12 of Figure 11 showing the exposed surface of the lid of the heating vessel illustrated in Figure 7.

Detailed Description of the Invention

This invention is suitable for use in a process wherein a hostile environment adversely effects the exposed interior surface of a heating vessel. It is particularly well suited for use in a heating process where high temperatures and additional conditions within the heating vessel such as circulation of corrosive and abrasive materials accelerate the wear of portions of the lid or roof of the heating vessel. The invention is presented in connection with a glass liquefaction process of the type taught in U S-A-4,381,934 to Kunkle et al but it is to be understood that the invention can be used in any heat related process where heat loss is to be reduced or exposed surfaces such as heating vessel walls require an insulating and/or protective coating.

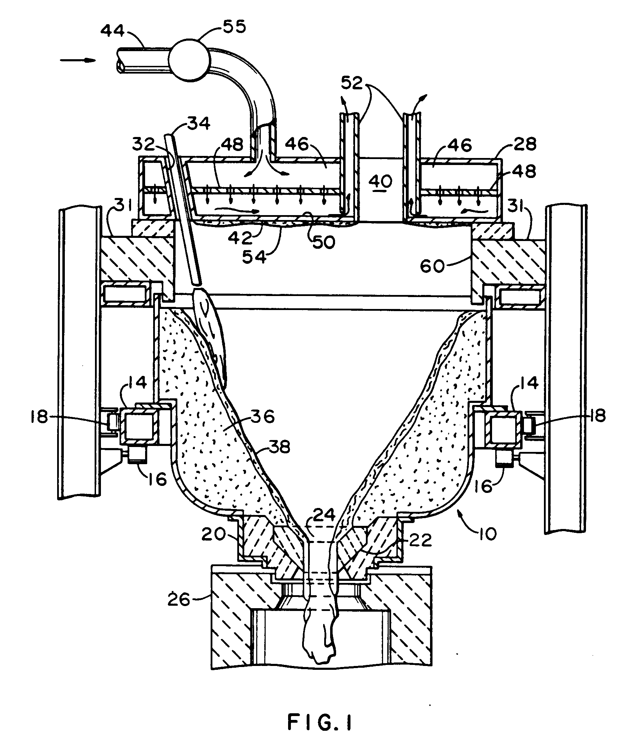

With reference to Figure 1, the liquefaction vessel 10 is of a type similar to that disclosed in U S-A-4,381,934. The vessel 10 includes a steel drum 12 supported on a circular frame 14 which is in turn mounted for rotation about a generally vertical axis corresponding to the center line of the drum 12 on a plurality of support rollers 16 and aligning rollers 18. An outlet assembly 20 below the drum 12 includes a bushing 22 with an open center 24 leading to a collecting vessel 26. A lid 28 is provided with stationary support by way of a circular frame 30 including lid support blocks 31. The lid 28 includes at least one opening 32 for inserting a burner 34. The burner 34 is preferably a multi-port burner and is preferably fired with oxygen and gaseous fuel, such as methane, but can be any type of heat source that produces hot gases to heat batch material 36 within the vessel 10, e.g., plasma torches.

Within the vessel 10, a layer of unmelted batch 36 is maintained on the walls of the drum 12 encircling a central cavity within which combustion and liquefaction takes place. The heat from the flame of the burners 34 causes a portion 38 of the batch 36 to become liquefied and flow downwardly through the bottom opening 24. The liquefied batch 38 flows out of the liquefaction vessel 10 and may be collected in the vessel 26 below the liquefaction vessel 10 for further processing as needed. The exhaust gases escape upwardly through an opening 40 in the lid 28 into an exhaust duct (not shown) or through an opening in the bottom of the heating vessel (not shown).

During the liquefaction process in the vessel 10, various materials become entrained in the hot exhaust gas from the burners 34. For example, in a typical soda-lime-silica batch these entrained materials may include vapors such as, but not limited to, sodium hydroxide and particulates such as, but not limited to, sodium sulfate or sodium carbonate, all of which are highly corrosive to metal and refractory materials. At the elevated temperatures within the heating vessel 10 the chemical attack on exposed interior surfaces of the vessel 10 is accelerated. In addition, abrasive particles within the vessel 10 may combine with the hot exhaust gas to form a corrosive and abrasive gas stream that circulates within the vessel 10. The interior surface 42 of the lid 28 presents a large exposed surface within the vessel 10 that is susceptible to this high temperature attack.

In general, the surface 42 is made of a corrosive resistant steel such as, but not limited to, chrome alloy steel. Although not limiting in the present invention, in the preferred embodiment of the invention the lid 28 is preferably a fluid cooled metal lid as shown in Figure 1. A cooling fluid, for example air or water, enters the lid 28 through inlet 44 and flows into plenum 46. The fluid then passes through perforate plate 48 to distribute the cooling fluid along inner surface 50 of the exposed interior surface 42 of the lid 28. The fluid circulates along the inner surface 50 and exits the lid 28 through outlet 52. The arrows in Figure 1 show the circulation of the cooling fluid through the lid 28. As the fluid circulates through the lid 28 it extracts heat from the interior surface 42 so as to maintain a surface temperature of surface 42 lower than that of the interior of the vessel 10. The removal of excess heat through the lid 28 in order to maintain a relatively low temperature of the lid 28 thus reducing heat degradation and prolonging its service life may result in an inefficient heating operation since additional heat must be added to the system in order to effect the amount of heat lost or removed.

In the embodiment of the invention illustrated in Figure 1, the surface 42 is cooled to a temperature such that material circulated by the hot exhaust gas within the vessel 10 will begin to adhere to it. In the initial stages of the vessel 10 heatup, the exhaust gas with the vessel 10 may include, but is not limited to, entrained airborne particulates such as sand grains, dolomite and limestone, molten sodium carbonate, and molten glass cullet particles. At a sufficiently low lid surface 42 temperature, material such as molten glass cullet and sodium carbonate will condense and "freeze" on the lid surface 42 with additional glass cullet and sodium carbonate, as well other solid particulate materials and condensed vapors, building up thereon. This built-up layer 54 has a coefficient of thermal conductivity at least an order of magnitude lower than the metal lid 28 and therefore provides an insulating effect so that more heat stays within the vessel 10 and less is removed through the cooled lid 28. As the temperature within the vessel 10 increases due to less heat loss, additional particulates within the exhaust gas stream begin to soften and also stick to the previously deposited batch layer 54 further increasing its insulating qualities. This in turn further reduces the heat loss through the lid 28 and increases the temperature within the vessel 10. In addition, unsoftened particulates are captured by the heat softened layer, further adding to its thickness and insulative properties. At a sufficiently high temperature within the vessel 10, the deposited material in layer 54 will start to melt at the surface exposed to the interior of the vessel 10 and drip back into the vessel 10, thus limiting the thickness of the batch layer 54 buildup and maintaining it at a generally constant layer thickness, with a correspondingly reduced heat loss. At this steady state condition, the final batch layer 54 thickness will directly relate to the types of material being heated and the interior temperature within the vessel 10. As a result, it is clear that the relationship between the engineering of the vessel and type of material within the vessel 10 requires balancing the cooling of the lid 28 and the temperature within the vessel 10 so as to develop the layer 54 thickness required for a specific heating process.

It should be noted that the surface 42 should be of a material that is not early oxidized because the metal oxide may combine with the material in the layer 54 to form an interface layer having a lower melting point than the layer 54. As a result the interface layer will loosened from lid 28, and the layer 54 will fall back into the vessel 10 exposing the lid surface 42. In addition, if the metal does become oxidized care must be taken that any oxides formed on the lid surface 42 will not add any color or any other detrimental contaminants to the resulting glass if the oxides become incorporated into the glass.

The batch layer 54 thickness can be modified by changing the heating rate within the vessel 10 or the cooling rate of the lid 28. For example, if the amount of heat provided by the burners 34 is reduced, the layer thickness will increase since the temperature within the vessel 10 would be lower, thus allowing the layer thickness to increase before the insulating properties of the layer raise the internal temperature of the vessel 10 to that required to melt the exposed outer surface of the layer 54. Conversely, by increasing the amount of heat provided by the burners 34 the thickness of layer 54 can be reduced. As discussed, the thickness of the layer 54 can also be modified by changing the cooling rate of the lid 28. Although not limited in the present invention, a valve 55 at inlet 44 may control the flow of cooling fluid in the lid 28 as shown in Figure 1. In particular, by increasing the cooling rate, the amount of heat removed from the system through the insulating layer is increased thus cooling the layer 54 and allowing its thickness to increase until the increased insulating effect of the layer increases the internal temperature of the vessel to that required to melt the exposed surface of the layer 54.

The batch layer 54 provides several interrelated functions. The layer 54 protects the surface against abrasive particles circulating within the vessel. It is contemplated that some of the particulates will get "stuck" to the layer and become part of the layer 54 itself. The layer 54 further functions as an insulator that both reduces the heat loss within the heating vessel 10 through the lid 28, and lowers the temperature of the lid surface 42, thus reducing the effects of heat degradation. The layer 54 also seals the lid surface 42 and protects it from chemical attack. Specifically, the layer 54 provides a barrier between the surface 42 of the lid 28 and oxygen, moisture, and corrosive vaporous gases that circulate within the vessel 10, such as, but not limited to, sodium sulfate, all of which will attack and corrode the lid surface 42. In addition, since chemical reactions are generally accelerated at high temperatures, the reduced temperature of the surface 42 of the lid 28, due to the insulating layer 54, reduces the rate of any chemical attack at the lid surface 42 by corrosive materials and thus prolongs the lid life.

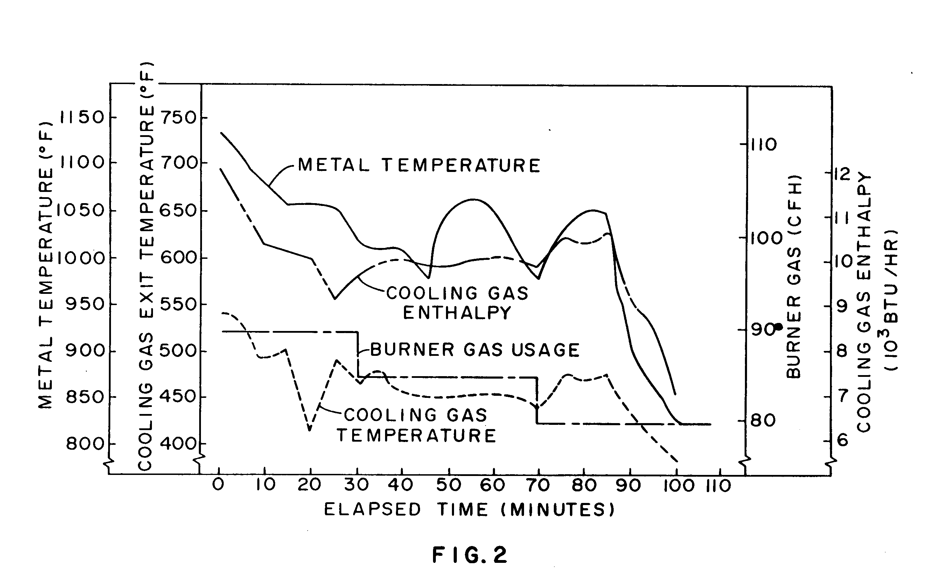

Figure 2 illustrates the effects on a lid of batch layer 54 buildup with respect to temperature and burner gas usage for a liquefaction vessel similar to that shown in Figure 1. In this example, the cooling gas was air. It should be noted that the reduction in the burner gas usage at elapsed time intervals of 30 minutes and 70 minutes was made to maintain a generally constant internal temperature within the vessel 10 as the insulating layer 54 began to buildup on the lid. Referring to Figure 2 prior to the batch buildup on the lid, the metal temperature was approximately 616°C (1140°F) , cooling gas enthalpy was approximately 121.3 x $10^6$ J (115 x $10^3$ BTU's) per hour, cooling air exit temperature was approximately 291°C (550°F) and the burner gas usage was approximately 2.55m$^3$ (90 cubic feet) per hour at approximately 29°C (85°F) ambient temperature. After about 100 minutes of allowing the batch layer to build up on the lid, these values were 441°C (825°F), 6.86•$10^6$ J (6.5 x $10^3$ BTU's) per hour, less than 204°C (400°F) and 2.27 m$^3$/h (80 CFH), respectively. As can be seen, the lid metal temperature, cooling gas enthalpy, and cooling gas exit temperature were all significantly reduced due to the batch layer buildup on the lid. It is believed that the two peaks in the metal temperature of the lid at elapsed times 55 minutes and 85 minute as shown in Figure 2 may have been due portions of the built up layer falling off of the lid surface 42 and the subsequent restabilization of the lid temperature. In general, it is expected that maintaining a lid surface 42 temperature of approximately 481°C±66°C (900°F±150°F) in a liquefaction vessel 10 with an internal vessel temperature sufficient to liquify a typical soda-lime-silica glass batch, will form an insulating and protective layer between 0.32 cm to 1.91 cm (1/8 inches to 3/4 inch) thick depending on heating and cooling conditions and batch formulation.

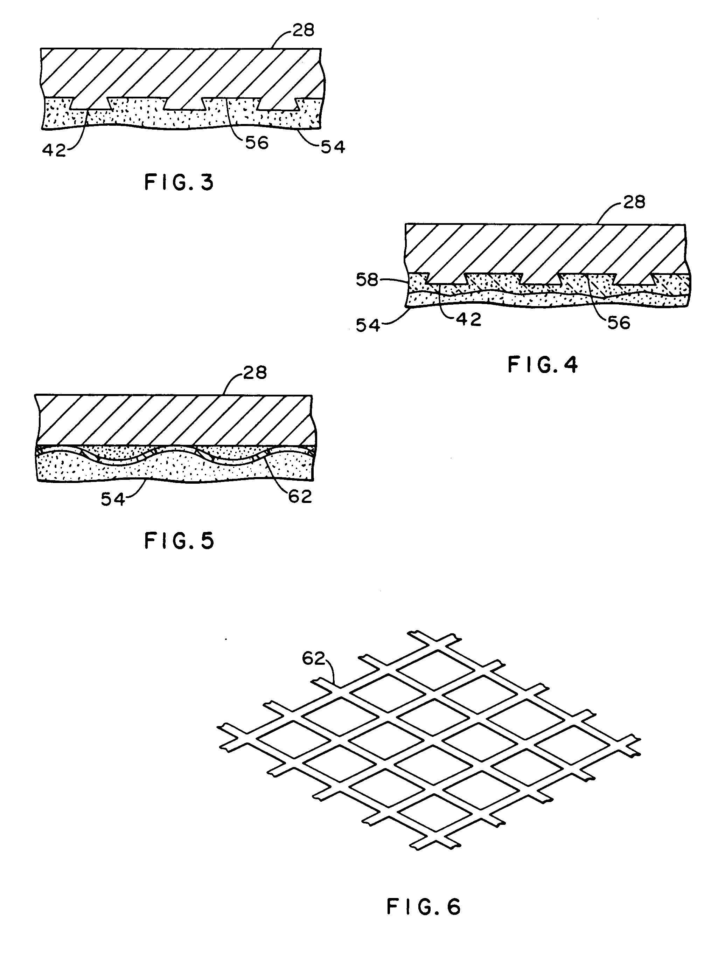

As the layer 54 increases in thickness, it is possible that a portion of the layer 54 may fall off exposing an area of the interior surface 42 of the lid 28. As a result, there may be a temporary loss of insulating effect requiring sudden change in heating and cooling demands. This may lead to difficulty in controlling internal vessel temperature and the amount of coolant required for the lid 28. If desired, the surface 42 of the lid may include anchoring devices such as, but not limited to, grooves 56 to accommodate and hold the batch. The grooves 56 may be on the order of 0.24 cm (3/32 inches) deep. Referring to Figure 3, although not limiting to the invention, the grooves 56 may be dovetailed in shape to help secure the batch layer 54 to the surface 42. The grooves 56 also provide additional surface area for initial layer 54 built up and may distribute and reduce surface-to-surface shearing forces between the layer 54 and lid surface 42 due to temperature change in the vessel 10. Referring to Figure 4, the initial adhesion of the lid 54 to the surface 42 may be enhanced by coating the surface 42, whether it be smooth or grooved, with a refractory cement 58 which provides an initial insulation in the vessel 10 and better adhesion of the layer 54 due to the resulting higher temperature formation of the initial portions of the layer 54.

Figures 5 and 6 illustrate an additional embodiments of the present invention. In order to further anchor layer 54 to lid 28, foraminous members 62, such as expanded metal, perforated plates, or screening are secured to surface 42 of the lid 28. The foraminous members 62 must be heat resistant and adequately attached to the 28 so as to help support the layer 54 as it builts on the lid surface 28. Although not limiting in the present invention, Figure 6 illustrate an expanded metal configuration that may be used. In one particular embodiment of the invention, No. 16 expanded metal fabricated from 410 stainless steel is tack welded at approximately 5.08 to 7.62 cm (2-3 inch) centers to the lid 28.

It should be appreciated to those skilled in the art that the benefits attributable to the batch layer 54 in the cooled metal lid 28 are equally attributable to a lid of any construction, for example, refractory blocks. The layer 54 will help seal and insulate the lid, maintain lower heat loss within the vessel 10, provide protection against accelerated chemical and abrasive attack and keep the refractory surface at a lower temperature and thus increase its effective service life. In addition, the present invention may be used to protect exposed portion within this vessel 10 other than the lid 28. For example, the present invention may be used to provide a protective layer on the inner surface 60 of lid support blocks 31. Furthermore, blocks 31 may be constructed in a manner similar to that of the lid 28 shown in Figure 1 i.e., fluid cooled, metal construction, so that the cooling rate of the blocks 31 may be controlled to vary the thickness of a built-up protective layer.

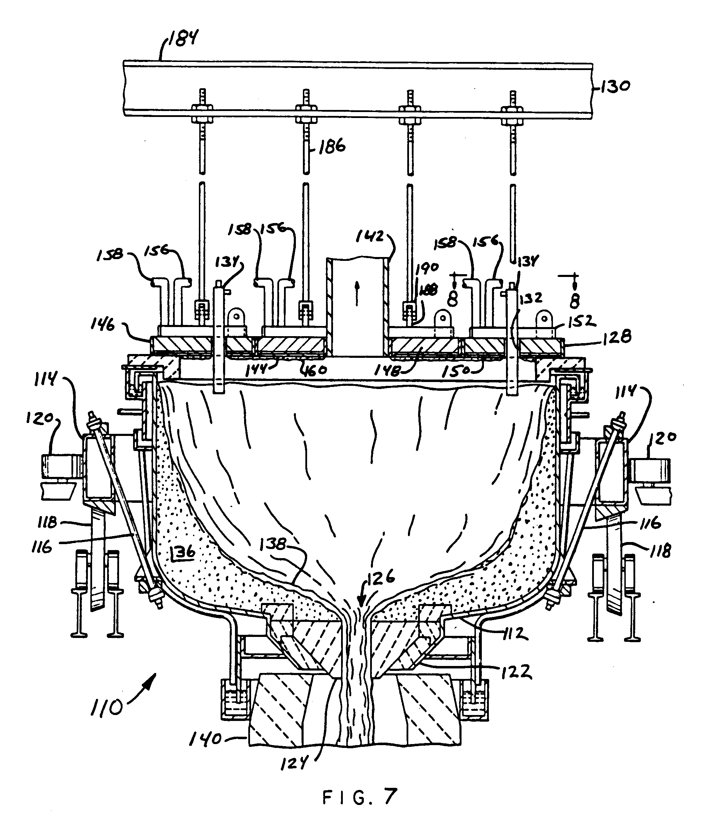

Figure 7 illustrates an alternate liquefaction vessel 110 similar to the type disclosed in U S-A-4,668,272 to Newcamp et al.. A steel drum 112 is suspended from a circular frame 114 by struts 116, which is mounted on a plurality of support rollers 118 and aligning rollers 120, for rotation about a generally vertically axis corresponding to the center line of the drum 112. An outlet 122 below the drum 112 includes a bushing 124 with an open center 126. Lid 128, which is the subject of this invention, is provided with a stationary support by way of a frame 130 which is mounted independently from and above the rotating drum 112 as shown in Figure 7. The lid 128 includes one or more openings 132 for inserting a high temperature burner 134 into the vessel 110.

Within the liquefaction vessel 110, a stable layer of unmelted batch 136 is maintained on the walls of the drum 112 and encircling the central cavity within which combustion and melting takes place. The heat from the burners causes a surface portion 138 of the batch to become liquefied and flow downwardly toward and through the bottom opening 126. The liquefied batch then flows out of the liquefaction vessel 110 and may be collected in a vessel 140 below the liquefaction vessel 110 for further processing as needed, for example as shown in U S-A-4,381,934 to Kunkle et al.. Exhaust gases escape either upwardly through an opening in the lid 128 and into an exhaust outlet 142 or downwardly through the bottom opening 126 at the bushing 124.

During the melting process in the liquefaction vessel 110, various materials become entrained in the hot exhaust gas stream. For example, in a typical soda-lime-silica glass batch, these entrained materials may include vapors such as, but not limited to, sodium oxide and particulates such as, but not limited to, sodium sulfate or sodium carbonate, all of which are highly corrosive. The vapors and particulates combine with the hot exhaust gas to form a corrosive and abrasive gas stream that will corrode inner surface 144 of the lid 128 that is exposed to the gas. In particular, the inner surface 144 is subjected to oxidation and sulfidation in the high temperature environment. The high temperature within the liquefaction vessel 110, which typically is in the range between approximately 1316°C to 1427°C (2400°F to 2600°F) near the lid surface 144, accelerates this corrosion and wear. In addition, particulates entrained in the gas stream may further erode the surface 144. It has been observed that this mechanical and chemical attack may wear alumina/zirconia/silica refractory at a rate in excess of 0.64 cm (one quarter inch) per 24 hour elapsed time period.

One method of reducing the wearing action of the exhaust gas on exposed portions of vessel 110, and in particular on lid 128, is to direct a high velocity gas from a gas jet between the exhaust gas and the exposed portion as taught in U S-A-4,675,041 to Tsai. The high velocity gas minimizes contact between the exhaust gas and the exposed portions of the vessel so as to reduce wear due to corrosive degradation.

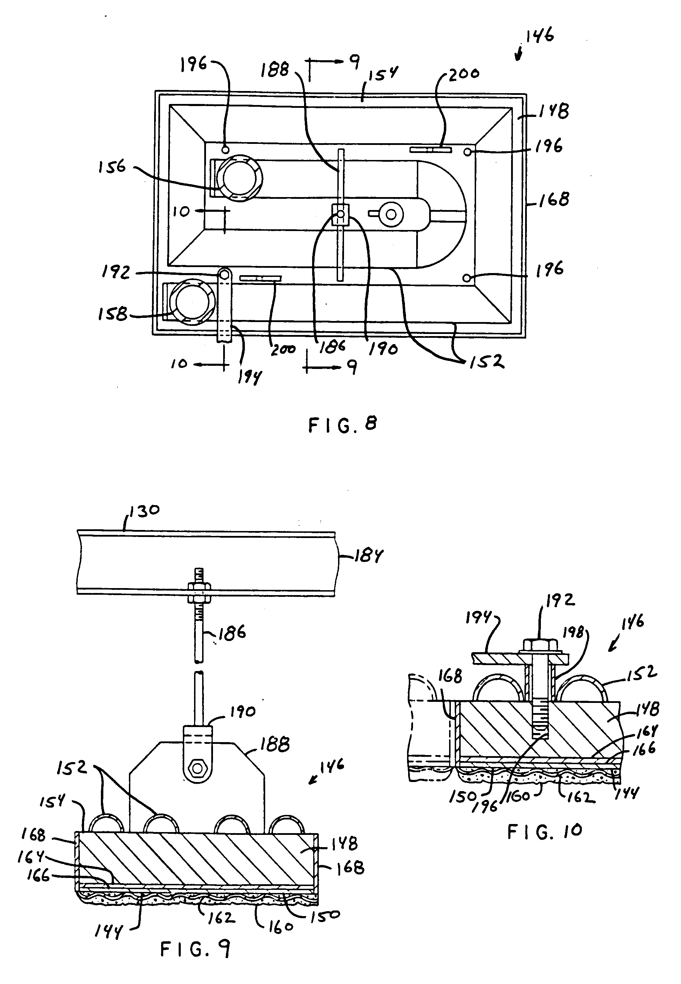

The present invention teaches another way to protect the exposed portions of the vessel from the circulating exhaust gas. Referring to Figures 8 through 10, the lid 128 of the present invention is constructed from a plurality of lid modules 146 each including a main base plate 148 and a high temperature, wear resistant overlayment 150 on the hot face 144 of the lid 128. The term "wear resistant" as used herein includes, but is not limited to, resistance to corrosion, abrasion, oxidation or any other surface depletion mechanism that will reduce the effective operating life of the lid 128. The overlayment 150 is preferably a plate or a weld overlay as will be discussed later. Although not limited in the present invention, in the preferred embodiment of the invention, the overlayment 150 is a chromium alloy stainless steel. The surface of a chromium alloy steel will oxidize leaving a chromium oxide layer that protects and seals the underlying steel against further oxidation and chemical attack. Chromium alloy steels are also abrasion resistant.

In the area of glass melting, ferritic stainless steel is preferred over austenitic stainless steel because the former has little or no nickel. If nickel from the lid 128 gets into the melted glass, it will form a nickel sulfide stone defect in the final glass ribbon. In the following discussion reference to the properties of chromium steel will be to ferritic steel but it should be appreciated that similar problems may occur with austenitic stainless steels.

Generally, the higher the chromium content in the steel the greater its oxidation and corrosive resistance, but the use of chromium steels present addition problems. For example, chromium steels containing more than about 15% chromium by weight and exposed to sustained temperatures in the range of about 399°C to 566°C (750°F to 1050°F) may increase in hardness with a corresponding decrease in ductility. This embrittlement increases with increasing chromium and time at temperature. As a result, even though a lid surface 144 exposed directly to an intense heat of greater than 538°C (1000°F) is constructed of chromium steel with a high content of chromium, if the temperature gradient through the overlay thickness is such that portions of the overlay are maintained within a critical predetermined temperature range, the lid 128 may develop internal cracking.

To prolong the useful life of the lid 128, the temperature of the lid 128, and more particularly, the overlayment 150, is controlled to avoid embrittlement. In the particular embodiment of the invention illustrated in Figures 8 through 10, each module 146 of the lid 128 is cooled by circulating coolant, preferably water, through a series of ducts 152 formed, for example, by pipe members divided along their longitudinal axis and welded to the cold face 154 of the base plate 148. This cooling arrangement is easily fabricated and avoids the need to form base plate 148 with integral ducts. Individual inlets 156 and outlets 158 allow the amount of coolant circulating through the ducts 152 to be varied so as to provide individual temperature control of each module 146 of the lid 128, if required. In addition, the inlets 156 and outlets 158 allow a single module 146 to be removed from the lid 128, as will be discussed later, without affecting the coolant circulation to the other modules 146.

The useful life of the lid 128 may be prolonged further by providing a protective cover for overlayment 150. In the preferred embodiment of the invention, the lid 128 is cooled to a temperature such that material circulated by the hot exhaust gas within the vessel 110 will begin to adhere to it. In the initial stages of the vessel 110 heatup, the exhaust gas with the vessel 110 may include, but is not limited to, entrained airborne particulates such as sand grains, dolomite and limestone, molten sodium carbonate, and molten glass cullet particles. At a sufficiently low hot face 144 temperature, material such as molten glass cullet and sodium carbonate will condense and "freeze" on the hot face 144 with additional glass cullet and sodium carbonate, as well other solid particulate materials and condensed vapors, building up thereon. This built-up layer 160 has a coefficient of thermal conductivity at least an order of magnitude lower than the metal lid 128 and therefore provides an insulating effect so that more heat stays within the vessel 110 and less is removed through the lid 128. As the temperature within the vessel 110 increases due to less heat loss, additional particulates within the exhaust gas stream begin to soften and also stick to the previously deposited batch layer 160 further increasing its insulating qualities. This in turn further reduces the heat loss through the lid 128 and increases the temperature within the vessel 110. In addition, unsoftened particulates are captured by the heat softened layer, further adding to its thickness and insulative properties. At a sufficiently high temperature within the vessel 110, the deposited material in layer 160 will start to melt at the surface exposed to the interior of the vessel 110 and drip back into the vessel 110, thus limiting the thickness of the batch layer 160 build-up and maintaining it at a generally constant layer thickness, with a correspondingly reduced heat loss. At this steady state condition, the final batch layer 160 thickness will directly relate to the types of material being heated and the interior temperature within the vessel 110.

The batch layer 160 provides several interrelated functions. The layer 160 protects the surface against abrasive particles circulating within the vessel. It is contemplated that some of the particulates will get "stuck" to the layer and become part of the layer 160 itself. The layer 160 further functions as an insulator that both reduces the heat loss within the heating vessel 110 through the lid 128, and lowers the temperature of the hot face 144, thus reducing the effects of heat degradation. The layer 160 also seals the face 144 and protects it from chemical attack. Specifically, the layer 160 provides a barrier between the face 144 of the lid 128 and oxygen, moisture, and corrosive vaporous gases that circulate within the vessel 110, all of which will attack and corrode the lid hot face 144. Since chemical reactions are generally accelerated at high temperatures, the reduced temperature of the hot face 144 of the lid 128, due to the insulating layer 160, reduces the rate of any chemical attack at the face 144 by corrosive materials and thus prolongs the lid life. However, it should be noted that the batch layer 160 itself is corrosive due to, for example, the sulfur content in the layer 160 which results in sulfidation attack, so that the hot face 144 of the lid 128 must still be resistant to chemical attack.

As the layer 160 increases in thickness, it is possible that a portion of the layer 160 may fall off exposing an area of the hot face 144 of the lid 128. As a result, there may be a temporary loss of insulating effect requiring sudden change in heating and cooling demands. This may lead to difficulty in controlling internal vessel temperature and the amount of coolant required for the lid 128. If desired, the hot face 144 of the lid may include anchoring devices such as, but not limited to, foraminous members 162, such as expanded metal, perforated plates, or screening secured to face 144 of the lid 128 to hold the layer 160, as shown in Figures 7, 9 and 10. The foraminous members 162 must be heat resistant and adequately attached to the lid 128 for sufficient cooling and to help support the layer 160 as it builds on the hot face 144.

In the particular embodiment of the invention illustrated in Figures 8 through 10, the lid 128 is fabricated from a 3.81 cm (1 1/2 inch) thick base plate 48 of low carbon steel, for example AISI 1010 steel, a 0.64 cm (1/4 inch) thick intermediate plate 164 of chrome steel having approximately 10 to 16 percent chromium content by weight and a 0.64 to 0.95 cm (1/4 inch to 3/8 inch) exposed inner plate 166 of chrome steel with approximately 16 to 27 percent chromium content by weight. The preferred coolant is water which is circulated through the ducts 152 to maintain the lid surface 144 at temperature between 482°C to 649°C (900°F to 1200°F). If required, chromium steel side plates 168 may be added to protect the side faces of the base plate 148, as illustrated in Figures 8 through 10. No. 16 expanded metal mesh fabricated from 410 stainless steel is tack welded at approximately 5.08 cm to 7.62 cm (2 to 3 inch) centers to plate 166 of the lid 128.

As discussed above, if the plate 166 is too thick, a portion of the plate may be cooled by a combination of the water cooling and/or the layer 160 build-up, to a temperature range within which cracking may occur due to the temperature gradient through the plate thickness. For example, if the plate 166 is constructed from chromium steel that is 125 percent by weight chromium and the plate 166 is cooled so that the temperature gradient from the surface 144 through the plate 166 results in a portion of the plate thickness being maintained at a temperature within its embrittlement range, there is a possibility that internal cracking may occur in the inner plate 166. By including an intermediate plate 164 of chromium steel that has a lower chromium content than the exposed inner plate 166, and establishing the thicknesses of plates 164 and 166 so that under a predetermined set of operating parameters, the temperature gradient through the overlayment 150 is such that the entire thickness of plate 166 is maintained above the embrittlement temperature range of 25% chromium content chromium steel, the plate 166 will not crack due to embrittlement. The lower chromium content steel can be maintained within the temperature range of the temperature gradient that will cause embrittlement of the 25% chromium content steel because, due to its lower chromium content, the embrittlement temperature range is lower. As a result, the intermediate plate 164 will not experience the same adverse affects within the embrittlement temperature range of the 25% chromium content steel so that the risk of embrittlement in either plate of the overlayment 150 is reduced.

It should be appreciated that a single plate of chromium steel having an embrittlement temperature range outside the temperature range of the temperature gradient through the overlayment 150 may be used so as to eliminate cracking due to embrittlement. A low chromium content chromium steel may have an embrittlement temperature range below the temperature gradient temperature range so that cracking due to embrittlement will not occur, but low chromium content chrome steel is less wear resistant than higher chromium content steels. On the other hand, a high chromium content chrome steel with an embrittlement range range above the temperature gradient temperature range, may provide adequate wear resistance but is more expensive than lower chromium content chrome steel.

As an alternative, the overlayment 150 on the hot face 144 may be constructed from multiple layers of the same chromium content chrome steel. With this arrangement, using high chromium content steel, the steel plates positioned between the main plate 148 and exposed outermost chromium steel plate may crack without the crack propagating through the overlayment 150 to the hot face 144 of lid 128. If lower chromium content steel is used, the exposed outermost plate may crack but the interior plates will not, so that the main plate 148 is protected.

The plates 164 and 166 may be secured to the main plate 148 in a number of ways well known in the art, such as conventional welding, explosion welding and roll bonding. It should be noted that the integrity of a conventionally welded system is limited by the defects that are inherent in the welding process, for example microcracking, voids, etc. In addition, conventional welding may not provide the degree of heat transfer between metal plates as is required in a high temperature operation. For the high temperature applications, explosion welding is the preferred method since it provides the continuous, intimate contact between plates that is necessary for good thermal conductivity through the lid. If explosion welding is used for fabrication, care must be taken to be sure that the impact strength of the plate materials is high enough to withstand the explosion welding techniques.

It should be appreciated that although in the preferred embodiment of this invention, the overlayment 150 is chromium steel, other alloys may be used, e.g., Alpha® IV which is an aluminum and chromium alloy available from Alleggny Lundlum Corp., Pennsylvania, and Stellite® 6 which is a cobalt and chromium alloy available from Cabot Stellite Division, Indiana.

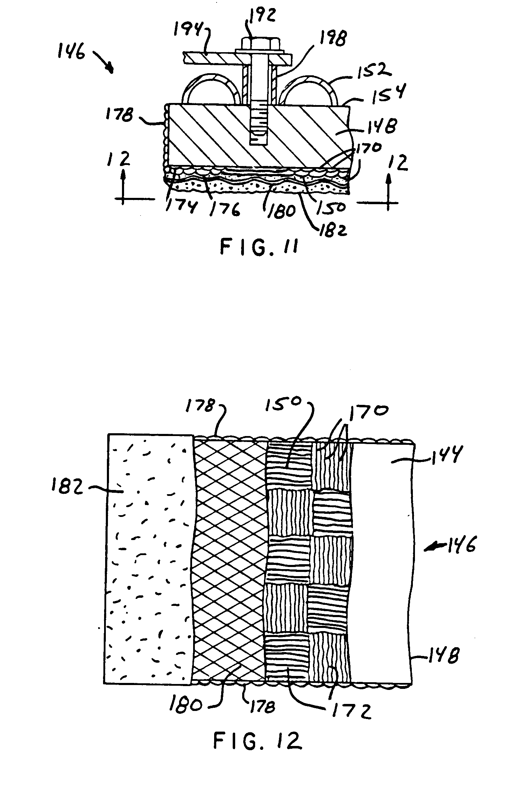

As an alternative, the overlayment 150 may be a weld overlay, i.e., a series of weld beads deposited side by side covering the entire hot face 144 of the lid 128. In the particular embodiment of the invention illustrated in Figures 11 and 12, chromium steel weld beads 170 are applied to the base plate 148 by any of a number of well known welding techniques, such as submerged arc welding, which is preferred, and metal insert gas weldings. The weld area 172 is preferably kept small to reduce distortion of the base plate 148 which may warp or bow if long weld beads 170 are used. After one layer 174 of weld overlay is applied, subsequent weld overlay layers 176 may be added, with the additional layers having a different chromium content if required, to avoid embrittlement as already discussed.

A weld overlay provides the intimate bond with the base plate 148 that is required for good thermal conductivity between base plate 148 and layer 174, but welding presents additional concerns that must be addressed. When a chromium alloy bead is applied to base plate 148, the two metals combine and the chromium content in the resulting bead is diluted, i.e., the chromium content will be approximately the average chromium content of the base material and the overlay material. For example, if the base material has no chromium and the weld overlay material is 20% chromium by weight, the resultant bead will be approximately 10% chromium i.e., (0% chromium in base plate + 20% chromium is overlay material)/2. It should be noted that successive passes of chromium overlayment material to build up the overlayment 150 thickness will result in less dilution since the underlying material will contain chromium. Continuing with the previous example, if a second layer of the same weld overlay material is added over the first layer, the resulting chromium content in the second layer will be approximately 15%, i.e., (10% in first layer + 20% in second layer)/2. It is obvious that the greater the number of weld passes, the less the chromium content reduction and thus the higher the resulting chromium content.

In addition, the type of base plate 148 material may influence the effectiveness of the weld overlay. It has been found that when the carbon content of the base plate 148 is too high, for example, as in cast iron, the chromium in the overlay material combines with the carbon to form chromium carbide. This combination reduces or eliminates the chromium available to form the chromium oxide protective layer as discussed earlier. To avoid this situation, low carbon and/or low carbon chromium steel base plate materials should be used. As an alternative, if the base plate carbon content is too high, a weld overlay layer of low carbon content material, such as pure iron, may be positioned between the base plate 148 and the chromium alloy steel weld overlay to act as a buffer and reduce chromium depletion from the weld overlay.

In the particular embodiment shown in Figures 11 and 12, 0.32 cm (1/8") thick beads 170 of 25% chromium content alloy steel are applied in approximately 15.24 cm by 15.24 cm (6 inch by 6 inch) weld areas 172 to cover a 6.35 cm (2 1/2 inch) thick low carbon steel base plate 148. Two 0.32 cm (1/8 inch) thick layers of weld overlay 178 protects the sides of the base plate 148. Stainless steel expanded metal 180 may be use to cover the hot face 144 and support the batch layer 182 which may be formed as discussed earlier.

The thickness of the base plate 148 and overlayment 150 and the cooling arrangement in any embodiment of the present invention are all interrelated and depend on the operating conditions of the vessel 110. The temperature at the hot face 144 of the lid 128 depends on the temperature within the vessel 110 and the amount of cooling in the lid 128. Cooling, in turn, depends on the thickness of the base plate 148 and overlayment 150 and their respective coefficients of the thermal conductivity and the spacing of the cooling ducts 152 on the cold face 154 of base plate 148, as well as the desired temperature at hot face 144. Also, as discussed earlier, embrittlement of the chromium overlayment 150 will determine layer thickness.

In the preferred embodiment of this invention, each individual module 146 is supported such that it may be removed without affecting the operation of the remaining modules 146. In the particular embodiment of the invention illustrated in Figures 7 and 9, modules 146 are supported from beam 184 of support. frame 130 via tie rod 186 and hanger 188. Clevis member 190 of tie rod 186 is pinned to hanger 188 while the upper end of rod 186 is removably secured to beam 184.

Each module 146 is preferably interconnected in any convenient fashion with adjacent modules to form a unitary lid structure. In the particular embodiment of the invention illustrated in Figure 10, bolt 192 extends through opposing ends of tie plate 194 and into bolt hole 196 of main plate 148. Collars 198 maintain tie plate 194 is spaced relation from main plate 148.

Positioning plates 200, similar in construction to hangar 188, may be provided for handling the module 146 as it is moved into and out of position in the lid 128 by a lifting mechanism, e.g., overhead hoist (not shown). The hoist may lower an assembly (not shown) to connect to positioning plates 100. The hoist cable is then tensioned so as to support the module 146 as the tie rod 186 and tie plates 194 are disconnected and the inlet 156 and outlet 158 are uncoupled from the coolant supply (not shown). The hoist then lifts the lid module 146 out from the lid 128, transfers it to an unloading site and returns to the opening in the lid 128 with a new lid module 146. As an alternative, the modules 146 may be lifted directly be the tie rod 186.

It should be appreciated that although the embodiments of the invention disclosed in Figure 7 through 12 illustrate a flat lid with rectangular removable modules, other lid and/or module configurations may be used. For example, the lid 128 may be domed and/or the modules 146 may be wedge shaped.

The modular construction of lid 128 allows the use of modules with different thickness of overlayment 150 at different locations. For example, the overlayment 150 for modules 146 at potential problem areas, such as in the vicinity of a material loading chute (not shown) or an exhaust outlet 142, may be thicker than other lid portions.

In addition, the lid design of the present invention may be combined with other lid or roof configurations wherein only selected portions of the roof require continual monitoring and replacement due to temperature and/or corrosive and/or abrasive conditions within the heating vessel. For example, a roof may be a continuous, one piece structure over a majority of the vessel with replaceable modules 146 at potential problem areas.

## Claims

1. A lid (28) for a batch material heating vessel (10) having a cavity wherein exhaust gas resulting from heating means (34) applying heat to a batch material (36) on the inner surface of said vessel (10) circulates therein **characterized in that** the lid (28) comprises a main body portion with a lower major surface (42) facing the interior of said heated vessel (10) and means (44, 46, 48, 52, 55) are provided to cool and to control cooling of said lower surface (42) such as to catch particulate and molten material entrained by the exhaust gas which forms a protective layer (54) and to control the thickness of this layer (54).

2. A lid (128) for a batch material heating vessel (10) having a cavity wherein exhaust gas resulting from heating means (134) applying heat to a batch material (136) on the inner surface of said vessel (10) circulates therein, **characterized in that** the lid comprises a main support plate (148) with a lower major surface (144) facing the interior of said heating vessel (10), a protective member (150) is provided overlaying at least a portion of said support plate (148) wherein said member (150) is resistant to high temperature, abrasive and corrosive gas and means (152, 156, 158) are provided to cool and to control cooling of said support plate (148) such as to catch particulate and molten material entrained by the exhaust gas which forms a protective layer (182) and to control the thickness of this layer (182).

3. The lid according to claim 2 wherein the main support plate (148) includes a plurality of support plates, forming individual lid modules (146) each including an overlaying protective member (150) and means (152, 156, 158) to cool and to control cooling of the lid modules (146).

4. The lid according to claims 2 or 3 wherein the protective member (150) is a chromium alloy.

5. The lid according to claims 2 to 4 wherein the protective member (150) includes a plurality of protective members (164, 166) in overlaying relation to each other.

6. The lid according to claim 1 wherein said lower major surface (42) contains grooved surface portions (56).

7. The lid according to claim 1 wherein said lower major surface (42) is provided with a layer (58) of refractory cement to increase the adhesion of said protective layer (54).

8. The lid according to claim 1 wherein a foraminous member (62) is secured to said lower major surface (42) to increase the adhesion of said protective layer (54).

9. The lid according to claims 2 or 3 wherein a foraminous member (162) is secured to said protective member (150).

10. The lid according to claim 4 wherein the chromium containing alloy is chromium steel comprising 10 - 27 weight percent chromium.

11. The lid according to claim 5 wherein said protective member (150) includes a first chromium steel layer (166) having approximately 16 to 27 percent chromium content by weight and a second chromium steel layer (164) having approximately 10 to 16 percent chromium content by weight wherein said first layer (166) overlays and is secured to at least a portion of said second layer (164) and said second layer (164) overlays and is secured to said main support plate (148).

12. The lid according to claim 3 wherein means (139, 184, 186, 188, 190) are provided to support the lid modules (146) in relation above said vessel (110) in a manner that selected lid modules are vertically movable to the other modules so as to allow removal and replacement of said selected lid modules.

13. The lid according to claim 3 wherein each module (146) is interconnected with adjacent modules to form a unitary lid structure.

14. The lid according to claim 2 wherein the cooling means includes duct means (152) secured to the upper major surface (154) of said main support plate (148) and means (156, 158) to circulate coolant through said duct means (152).

15. A method of protecting a lid (28, 128) of a batch material heating vessel (10, 110) having a cavity wherein exhaust gas circulates which has resulted from heating means (34, 134) applying heat to a batch material (36, (130) on the inner surface of said vessel (10, 110) and wherein said exhaust gas includes entrained particulate and molten material and moves against a lower major surface (42, 144) of said lid (28, 128)
**characterized by**
cooling said lower major surface (42, 144) of said lid (28, 128) to a temperature such that said particulate material contacting said cooled surface (42, 144) will adhere to said surface and form a protective layer (54, 160) on said surface (42, 144) wherein additional entrained material adheres to previously deposited entrained material so as to increase the thickness of said layer (54, 160) and controlling the thickness of the protective layer (54, 160) by controlling the cooling.

16. The method according to claim 15 wherein said protective layer (54, 160) thermally insulates said lower surface (42, 144) and further includes the step of increasing the thickness of said layer (54, 160) until the temperature within said vessel (10, 110) is sufficient to melt newly deposited entrained material on said layer (54, 160) so as to maintain relatively constant layer thickness on said surface (42, 144) and a relatively constant heating temperature within said vessel (10, 110).

17. The method according to claim 15 or 16 further including the step of varying the amount of heat in said vessel (10, 110) so as to vary the thickness of said layer (54, 160).

18. The method according to claim 17 further including the step of varying the cooling of said lower surface (42, 144) to vary the thickness of said layer (54, 160).

19. The method of claims 15 to 18 wherein the temperature of the lower major surface (42, 144) is maintained between 482°C to 649°C (900° to 1200°F).

20. The method of claims 15 to 18 wherein the lower major surface (144) of said lid (128) comprises a protective member (150) and the temperature of said protective member (150) is maintained outside of a temperature range within which said protective member (150) cracks.

**Revendications**

1. Couvercle (28) pour un récipient de chauffe (10) de la matière première ou composition vitrifiable, qui comporte une cavité dans laquelle le gaz d'échappement ou résiduaire qui provient de l'application de chaleur par le dispositif de chauffe (34) à une matière première ou composition vitrifiable (36) sur la surface interne du récipient (10) précité circule,
caractérisé en ce que
le couvercle (28) comprend un corps principal avec une surface principale (42) qui regarde vers l'intérieur du récipient chauffé (10) et des dispositifs (44, 46, 48, 52, 55) sont prévus pour refroidir et régler le refroidissement de cette surface inférieure (42) de manière à attraper la matière particulaire et fondue entraînée par le gaz d'échappement, qui forme une couche protectrice (54) et à régler l'épaisseur de cette couche (54).

2. Couvercle (128) pour un récipient de chauffe (10) de la matière première ou composition vitrifiable, qui comporte une cavité dans laquelle le gaz d'échappement ou résiduaire qui provient de l'application de chaleur par le dispositif de chauffe (134) à une matière première ou composition vitrifiable (136) sur la surface interne du récipient (10) précité circule,
caractérisé en ce que
le couvercle comprend une plaque de support principale (148) avec une surface principale inférieure (144) qui regarde vers l'intérieur du récipient de chauffe précité (10), un élément protecteur (150) est prévu qui chevauche au moins une partie de la plaque de support précitée (148), où cet élément (150) résiste aux températures élevées, un gaz abrasif et corrosif et des dispositifs (152, 156, 158) sont prévus pour refroidir et régler le refroidissement de ladite plaque de support (148) de manière à attraper la matière pariticulaire et fondue entraînée par le gaz d'échappement ou résiduaire, qui forme une couche protectrice (182) et à régler l'épaisseur de cette couche (182).

3. Couvercle suivant la revendication 2, caractérisé en ce que la plaque de support principale (148) comprend une multiplicité de plaques de support, formant des modules de couvercle individuels (146), qui comprennent chacun un élément protecteur chevauchant (150) et des dispositifs (152, 156, 158) pour refroidir et régler le refroidissement des modules (146) du couvercle.

4. Couvercle suivant la revendication 2 ou 3, caractérisé en ce que l'élément protecteur (150) est en un alliage du chrome.

5. Couvercle suivant les revendications 2 à 4, caractérisé en ce que l'élément protecteur (150) comprend une multiplicité d'éléments protecteurs (164, 166) qui se chevauchent mutuellement.

6. Couvercle suivant la revendication 1, caractérisé en ce que la surface principale inférieure précitée (42) contient des parties de surface à gorges (56).

7. Couvercle suivant la revendication 1, caractérisé en ce que ladite surface principale inférieure (42) est pourvue d'une couche (58) de ciment réfractaire pour augmenter l'adhérence de ladite couche protectrice (54).

8. Couvercle suivant la revendication 1, caractérisé en ce qu'un élément perforé (62) est assujetti à ladite surface principale inférieure (42) pour augmenter l'adhérence de ladite couche protectrice (54).

9. Couvercle suivant la revendication 2 ou 3, caractérisé en ce qu'un élément perforé (162) est assujetti à l'élément protecteur (150).

10. Couvercle suivant la revendication 4, caractérisé en ce que l'alliage contenant du chrome est de l'acier au chrome comprenant de 10 à 27% en poids de chrome.

11. Couvercle suivant la revendication 5, caractérisé en ce que l'élément protecteur précité (150) comprend une première couche d'acier au chrome (166) qui comporte approximativement 16 à 27% en poids de chrome et une seconde couche d'acier au chrome (164) possédant approximativement 10 à 16% en poids de chrome, où ladite première couche (166) chevauche et est assujettie à au moins une partie de ladite seconde couche (164) et ladite seconde couche (164) chevauche et est assujettie à ladite plaque de support principale (148).

12. Couvercle suivant la revendication 3, caractérisé en ce que les dispositifs (139, 184, 186, 188, 190) sont prévus pour supporter les modules (146) de couvercle en relation au-dessus du récipient (110) de manière à ce que des modules de couvercle choisis soient verticalement déplaçables par rapport à d'autres modules, de manière à permettre l'enlèvement et le remplacement desdits modules de couvercle choisis.

13. Couvercle suivant la revendication 3, caractérisé en ce que chaque module (146) est raccordé aux modules voisins pour former une structure de couvercle unitaire.

14. Couvercle suivant la revendication 2, caractérisé en ce que le dispositif de refroidissement comprend un conduit (152) assujetti à la surface supérieure principale (154) de ladite plaque de support principale (148) et des dispositifs (156, 158) pour faire circuler un agent de refroidissement à travers le conduit (152).

15. Procédé de protection d'un couvercle (28, 128) d'un récipient de chauffe d'une matière première ou composition vitrifiable (10, 110), qui comporte une cavité dans laquelle circule le gaz d'échappement provenant de l'application de chaleur par le dispositif de chauffe (34, 134) à une matière première ou composition vitrifiable (36, 130), sur la surface interne du récipient précité (10, 110) et où ce gaz d'échappement ou résiduaire comprend de la matière particulaire et fondue et se déplace contre une surface principale inférieure (42, 144) du couvercle (28, 128),

caractérisé en ce que

on refroidit ladite surface principale inférieure (42, 144) du couvercle (28, 128) jusqu'à une température telle que ladite matière particulaire qui entre en contact avec la surface refroidie (42, 144) vienne adhérer à cette surface et former une couche protectrice (54, 160) sur cette surface (42, 144), où de la matière entraînée supplémentaire adhère à la matière entraînée précédemment déposée de manière à ainsi accroître l'épaisseur de ladite couche (54, 160) et on règle l'épaisseur de la couche protectrice (54, 160) en réglant le refroidissement.

16. Procédé suivant la revendication 15, caractérisé en ce que ladite couche protectrice (54, 160) isole thermiquement ladite surface inférieure (42, 144) et il comprend également l'étape d'augmentation de l'épaisseur de ladite couche (54, 160) jusqu'à ce que la température dans le récipient précité (10, 110) soit suffisante pour faire fondre de la matière entraînée nouvellement déposée sur ladite couche (54, 160) de manière à maintenir une épaisseur de couche relativement constante sur ladite surface (42, 144) et une température de chauffage relativement constante dans le récipient précité (10, 110).

17. Procédé suivant la revendication 15 ou 16, caractérisé en ce qu'il comprend l'étape supplémentaire qui consiste à faire varier la quantité de chaleur dans le récipient (10, 110), de façon à modifier l'épaisseur de ladite couche (54, 160).

18. Procédé suivant la revendication 17, caractérisé en ce qu'il comprend aussi l'étape de variation du refroidissement de ladite surface inférieure (42, 144), de manière à faire varier l'épaisseur de ladite couche (54, 160).

19. Procédé suivant les revendications 15 à 18, caractérisé en ce que la température de la surface principale inférieure (42, 144) est maintenue entre 482°C et 649°C (900° à 1200°F).

20. Procédé suivant les revendications 15 à 18, caractérisé en ce que la surface principale inférieur (144) du couvercle précité (128) comporte un élément protecteur (150) et la température de l'élément protecteur en question (150) est maintenue en dehors d'une plage de températures dans laquelle l'élément protecteur (150) craque ou se fendille.

**Patentansprüche**

1. Deckel (28) für einen Behälter (10) zum Erwärmen eines Gemengematerials, mit einem Hohlraum, in dem Abgas zirkuliert, das von Heizeinrichtungen (34) stammt, die Wärme auf ein Gemengematerial (36) auf der inneren Oberfläche des Behälters (10) aufbringen,

**dadurch gekennzeichnet,**

daß der Deckel (28) ein Hauptkörperteil mit einer dem Innenraum des Heizbehälters (10) zugewandten unteren Hauptoberfläche (42) aufweist und Einrichtungen (44, 46, 48, 52, 55) vorhanden sind, um diese untere Oberfläche (42) zu kühlen und um das Kühlen so zu steuern, daß im Abgas mitgerissenes, teilchenförmiges und geschmolzenes Material aufgefangen und eine Schutzschicht (54) ausgebildet wird und um die Dicke dieser Schicht (54) zu steuern.

2. Deckel (128) für einen Behälter (10) zum Erwärmen eines Gemengematerials, mit einem Hohlraum, in dem Abgas zirkuliert, das von Heizeinrichtungen (134) stammt, die Wärme auf ein Gemengematerial (136) auf der inneren Oberfläche des Behälters (10) aufbringen,

**dadurch gekennzeichnet,**

daß der Deckel eine Hauptstützplatte (148) mit einer dem Innenraum des Heizbehälters (10) zugewandten unteren Hauptoberfläche (144) aufweist, ein Schutzelement (150) vorhanden ist, das mindestens einen Teil der Stützplatte (148) bedeckt, wobei das Element (150) gegenüber hoher Temperatur, abrasivem und korrosivem Gas beständig ist und Einrichtungen (152, 156, 158) vorhanden sind, um die Stützplatte (148) zu kühlen und um das Kühlen so zu steuern, daß im Abgas mitgerissenes, teilchenförmiges und geschmolzenes Material aufgefangen und eine Schutzschicht (182) ausgebildet wird und um die Dicke dieser Schicht (182) zu steuern.

3. Deckel nach Anspruch 2,

**dadurch gekennzeichnet,**

daß die Hauptstützplatte (148) eine Vielzahl von Stützplatten aufweist, die individuelle Deckelmodule (146) bilden, die jeweils ein bedeckendes Schutzelement (150) aufweisen, und Einrichtungen (152, 156, 158) vorhanden sind, um die Deckelmodule (146) zu kühlen und um das Kühlen zu steuern.

14

**4.** Deckel nach Ansprüchen 2 oder 3,
**dadurch gekennzeichnet,**
daß das Schutzelement (150) aus einer Chromlegierung ist.

**5.** Deckel nach Ansprüchen 2-4,
**dadurch gekennzeichnet,**
daß das Schutzelement (150) eine Vielzahl von sich jeweils bedeckenden Schutzelementen (164, 166) aufweist.

**6.** Deckel nach Anspruch 1,
**dadurch gekennzeichnet,**
daß die untere Hauptoberfläche (42) mit Nuten versehene Oberflächenteile (56) enthält.

**7.** Deckel nach Anspruch 1,
**dadurch gekennzeichnet,**
daß die untere Hauptoberfläche (42) mit einer Schicht (58) aus Schamottemörtel versehen ist, um die Haftung der Schutzschicht (54) zu erhöhen.

**8.** Deckel nach Anspruch 1,
**dadurch gekennzeichnet,**
daß an der unteren Hauptoberfläche (42) ein Gitterelement (62) befestigt ist, um die Haftung der Schutzschicht (54) zu erhöhen.

**9.** Deckel nach Ansprüchen 2 oder 3,
**dadurch gekennzeichnet,**
daß an dem Schutzelement (150) ein Gitterelement (162) befestigt ist.

**10.** Deckel nach Anspruch 4,
**dadurch gekennzeichnet,**
daß die chromhaltige Legierung Chromstahl mit 10-27 Gew.-% Chrom ist.

**11.** Deckel nach Anspruch 5,
**dadurch gekennzeichnet,**
daß das Schutzelement (150) eine erste Chromstahlschicht (166) mit einem Chromgehalt von etwa 16-27 Gew.-% und eine zweite Chromstahlschicht (164) mit einem Chromgehalt von etwa 10-16 Gew.-% aufweist, wobei die erste Schicht (166) die zweite Schicht (164) bedeckt und mindestens an einem Teil der zweiten Schicht befestigt ist und die zweite Schicht (164) die Hauptstützplatte (148) bedeckt und an ihr befestigt ist.

**12.** Deckel nach Anspruch 3,
**dadurch gekennzeichnet,**
daß Einrichtungen (139, 184, 186, 188, 190) vorhanden sind, um die Deckelmodule (146) in Verbindung über dem Behälter (110) in einer Weise zu halten, daß ausgewählte Deckelmodule senkrecht beweglich gegenüber anderen Modulen sind, um Entfernen und Ersetzen der ausgewählten Dekkelmodule zu ermöglichen.

**13.** Deckel nach Anspruch 3,
**dadurch gekennzeichnet,**
daß jedes Modul (146) mit benachbarten Modulen verbunden ist, um einen einheitlichen Deckelaufbau auszubilden.

**14.** Deckel nach Anspruch 2,
**dadurch gekennzeichnet,**
daß die Kühleinrichtung an der oberen Hauptoberfläche (154) der Hauptstützplatte (148) be-festigte Kühlluftführungskanäle (152) und Ein-richtungen (156, 158) zum Hindurchleiten von Kühlmittel durch die Kühlluftführungskanäle (152) aufweist.

**15.** Verfahren zum Schützen eines Deckels (28, 128) eines Behälters (10, 110) zum Erwärmen eines Gemengematerials mit einem Hohlraum, in dem Abgas zirkuliert, das von Heizeinrichtungen (34, 134) stammt, die Wärme auf ein Gemengematerial (36, 130) auf der inneren Oberfläche des Behälters (10, 110) aufbringen, und wobei das Abgas mitgerissenes, teilchenförmiges und geschmolzenes Material enthält und sich gegen die untere Hauptoberfläche (42, 144) des Deckels (28, 128) bewegt,
**gekennzeichnet durch**
Kühlen der unteren Hauptoberfläche (42, 144) des Deckels (28, 128) auf eine Temperatur, so daß das die gekühlte Oberfläche (42, 144) berührende teilchenförmige Material an dieser Oberfläche haftet und eine Schutzschicht (54, 160) an der Oberfläche (42, 144) ausbildet, wobei zusätzlich mitgerissenes Material an zu-vor abgelagertem, mitgerissenen Material haf-tet, um die Dicke der Schicht (54, 160) zu erhöhen, und Steuern der Dicke der Schutzschicht (54, 160) durch Steuern der Kühlung.

**16.** Verfahren nach Anspruch 15,
**dadurch gekennzeichnet,**
daß die Schutzschicht (54, 160) die untere Oberfläche (42, 144) thermisch isoliert und daß es weiterhin den Schritt des Erhöhens der Dicke der Schicht (54, 160) einschließt, bis die Temperatur in dem Behälter (10, 110) ausreichend ist, um neu auf der Schicht (54, 160) abgelagertes, mitgerissenes Material zu schmelzen, um eine relativ konstante Schichtdicke auf der Oberfläche (42, 144) und eine relativ konstante Erwärmungstemperatur im Behälter (10, 110) aufrechtzuhalten.

**17.** Verfahren nach Anspruch 15 oder 16,

**dadurch gekennzeichnet,**
daß es weiterhin den Schritt des Veränderns der Wärmemenge in dem Behälter (10, 110) einschließt, um die Dicke der Schicht (54, 160) zu verändern.

18. Verfahren nach Anspruch 17,
**dadurch gekennzeichnet,**
daß es weiterhin den Schritt des Veränderns der Kühlung der unteren Oberfläche (42, 144) einschließt, um die Dikce der Schicht (54, 160) zu verändern.

19. Verfahren nach Ansprüchen 15-18,
**dadurch gekennzeichnet,**
daß die Temperatur der unteren Hauptoberfläche (42, 144) zwischen 482°C-649°C (900°-1200°F) gehalten wird.

20. Verfahren nach Ansprüchen 15-18,
**dadurch gekennzeichnet,**
daß die untere Hauptoberfläche (144) des Dekkels (128) ein Schutzelement (150) aufweist und die Temperatur des Schutzelementes (150) außerhalb des Temperaturbereiches gehalten wird, in dem das Schutzelement (150) zerbricht.

FIG.1

FIG.2

FIG. 3

FIG. 4

FIG. 5

FIG. 6

FIG. 7

EP 0 297 406 B1

FIG. 8

FIG. 9

FIG. 10

21

FIG. 11

FIG. 12